# EUROPEAN PATENT APPLICATION

(11) **EP 1 477 920 A1**
(43) Date of publication of application: **17.11.2004**
(21) Application number: 04076426.8
(22) Date of filing: 14.05.2004
(51) Int. Cl.: G06F 17/60, G06F 17/40

(54) **System, method, computer programme and data carrier for managing the supply chain of biomass intended for use as a fuel sustainable energy production**

(30) Priority: 14.05.2003 NL 1023415
(71) Applicant: Essent Energie B.V., 5223 LA 's-Hertogenbosch (NL)
(72) Inventor: Van Weereld, Alfons Ludwig Jozef, 5271 LG Sint Michielsgestel (NL)
(74) Representative: Dohmen, Johannes Maria Gerardus

(57) **Abstract**

A system and a method for electronically monitoring and managing the supply chain of biomass intended for use as a fuel in the production of energy, in particular electric energy, characterized by:
at least one electronic database (61) coupled with the communication network, and
at least one computer (60) coupled with a communication network (62), which comprises means for receiving and processing data regarding aspects of the supply chain that affect the quality of the biomass, including physical and chemical properties of the biomass, and recording said data in the database (61), and
means (60) for verifying compliance with criteria regarding the quality of the biomass as laid down within the supply chain on the basis of data recorded in the database.

## Description

The invention relates to a system, a method, a computer programme and a data carrier comprising such a computer programme for managing the supply chain of biomass intended for use as a fuel for sustainable energy production, in particular electric energy production.

In recent years the use of sustainable energy sources such as wind, water and the sun, but also of pure biomass, for the production of electric energy has significantly expanded. The electric energy produced by means of these energy sources is known in practice by names such as Groene Stroom® and Groen Zakelijk®.

Partly due to environmental regulations and an increasing environmental awareness among consumers of energy, the share of sustainable energy sources in the production of energy is expected to increase even further in the next few years. The sustainable character of this kind of energy must be guaranteed and reliable, therefore.

In order to be able to guarantee the sustainability of the biomass being supplied as a fuel it is important that it is possible to determine unambiguosly that, as far as the origin of the biomass and the various processing steps to which the biomass is subjected in the course of the supply chain from the source till the delivery to the energy producer are concerned, as well as for the biomass itself the requirements made with regard to technical aspects of the supply chain have been complied with. That is, from the source and the production of the biomass to be supplied until the delivery to the energy producer, and of the properties as a fuel of the supplied biomass itself for use thereof as a sustainable energy source.

Since biomass is being produced and marketed all over the world and since a large number of parties are involved in the execution of the various processing steps to which the biomass is subjected and different means are used in different countries, so that widely varying national and international aspects have to be taken into account, it is important that the data regarding compliance with the requirements with regard to the origin of the biomass and the processing steps to which the biomass is or has been subjected in the course of the supply chain be established on the spot, as much as possible and can subsequently be recorded directly in a data file for the biomass to be supplied.

In that case it is possible to establish, for example on the basis of the data recorded in the data file with regard to technical aspects of the entire supply chain and to the properties as a fuel of the biomass to be supplied, whether the biomass to be supplied or being supplied complies with the requirements made and can be used for sustainable energy production.

The object of the invention is therefore to provide a method and a computer system for electronically monitoring and managing the supply chain of biomass intended for use as a fuel for producing energy, wherein information with regard to technical aspects of the entire supply chain can be provided in a quick and efficient manner on the basis of data to be supplied at various discernable fixed moments in the course of the supply chain with regard to the quality of the biomass to be supplied within the framework of the supply chain and with regard to compliance with the requirements regarding the origin of the biomass and the processing steps to be carried out in the course of the supply chain, without this having any appreciable cost-increasing effect. That is, until the moment of delivery and with regard to the properties of the biomass as a fuel at the moment of delivery, in order to be able to grant approval of the use of the biomass as a sustainable energy source at the moment of the delivery of the biomass.

In order to accomplish that object, the invention in the first place provides a method for electronically monitoring and managing the supply chain of biomass intended for use as a fuel for the production of energy, in particular electric energy, with the support of a suitably programmed computer system, which method is characterized by the steps of:
receiving and processing data with regard to aspects of the supply chain that affect the quality of the biomass, including physical and chemical properties of the biomass, and recording said data in an electronic database, and
verifying compliance with criteria as laid down within the framework of the supply chain with regard to the quality of the biomass on the basis of data stored in the database.

Accordingly, the invention provides a verification method for the acceptation of sustainable biomass for the production of energy, such as Groene Stroom®, so as to be able to ensure and guarantee the desired and necessary reliability with regard to the use of biomass as a sustainable energy source. The sustainability of the biomass supplied in accordance with this method can be guaranteed in that compliance with the criteria as defined is verified on a regular basis. The method is carried out in a computer-supported manner, which enables worldwide application of the method. This is important, in particular because biomass is being produced and marketed all over the world, in which connection widely varying national and international aspects as well as a large number of parties and means involved in the supply chain have to be taken into account.

In another embodiment of the method according to the invention, the method in particular comprises the further step of making available predetermined questionnaires/checklists based on verification criteria regarding compliance with requirements with regard to the origin, the production and the processing steps to which the biomass is or has been subjected during a respective stage of the supply chain, wherein the step of receiving and processing data and recording said data in a database comprises the receiving of declarations relating to the biomass to be supplied within the supply chain, which are to be provided by participants in the execution of the supply chain, which declarations are or have been drawn up at predetermined moments within the supply chain on the basis of questionnaires/checklists, the processing of the declarations that have been received and the recording of the processed declarations in a database, as well as the step of forming a historical data file for the biomass in question on the basis of the processed declarations.

All the required documents are collected in an electronic file or historic data file. Said documents together afford evidence that the raw materials originate from a sustainable source and that there is a closed chain of custody. To support this process, various checklists are generated for this file. This ensures that the certificates for the parties involved in the supply chain are issued subject to compliance with the requirements and quality standards as defined. In addition, the file affords evidence that the biomass used by the energy producer in question comes from a sustainable source.

The above aspects achieve that all the data relating to the quality of the supplied biomass and to the compliance with the requirements as laid down for the entire supply chain will be available at the moment of delivery of the biomass intended for use as a fuel for the production of energy. To that end, the invention provides for the issuing of a certificate of approval of the biomass being delivered for use as a fuel on the basis of the data stored in the data file with regard to the compliance with the relevant requirements and criteria within the framework of the supply chain.

In yet another embodiment of the method according to the invention, the supply chain in particular comprises the route from the producer of the biomass to the energy producer or buyer of the biomass, possibly with an intermediate party or parties such as (re)sellers, with separate requirements and verification criteria being formulated for one or more means of production involved in the production of the biomass, processing means involved in the processing of the biomass, storage means involved in the storage of the biomass, means of transport involved in the transportation of the biomass, and energy producing means involved in the production of energy from the biomass.

In other words, the method according to the invention provides for the formulation of necessary or minimum requirements for the biomass that apply in the course of the supply chain from source to customer. Think in this connection of the means involved in the transportation of the biomass from the producer to the processing plant, from the processing plant to the temporary storage location, from the storage location to the port of loading, to a port of discharge or port of transshipment by ship or train and from the port of transshipment to the energy producer.

The requirements and criteria in accordance with the invention may relate to one or more of the following aspects:
- compliance with government regulations, both national and international,
- observance of local rights of use,
- compliance with and improvement of the good and safety standards for persons involved in the supply chain,
- optimisation of economic feasibility,
- custody and monitoring of biodiversity reserves, soil, ecosystems and landscapes,
- long-term sustainability of biomass sources, and
- the quality of the biomass in relation to the production of energy.

According to yet another embodiment of the invention, a distinction may be made in this regard between biomass obtained from forestry and biomass obtained from farming, and specific or additional requirements and verification criteria may be formulated in addition to existing and nationally and/or internationally recognized requirements and verification criteria. Existing requirements and verification criteria for farming biomass are known by names or acronyms such as EGFC 2, EUREPGAP and Organic Criteria. Verification criteria that apply to forestry are inter alia known as FSC, PEFC, CSA and SFI criteria. For the chain of custody as a whole, EGFC 1 requirements apply. Said requirements are available on the Internet, for example, via www.skalint.com. Any additional criteria and requirements may be based on the United Nations' "Agenda 21" development programme, for example.

In particular with a view to testing the quality of the biomass itself, the method according to the invention, in yet another embodiment thereof, provides for the sampling and analysis of the biomass for the purpose of determining chemical and physical properties thereof, as well as for the measuring of physical and chemical properties of the biomass for the purpose of recording the same in the data file.

The chemical and physical properties in question may be geared to the generation of energy as such, for example the water content, the combustion value etc of the biomass, but also the presence therein of types of pesticides or herbicides that may constitute a health hazard to persons involved in the supply chain, and the amounts in which they are present. Other parameters are conceivable to and measurable by those skilled in the art.

It will be understood that the requirements and verification criteria in question may have their own specific significance for each of the elements involved in the supply chain between the source and the end user and may as such lead to specific checklists and documents geared to a particular element.

In yet another embodiment of the invention, predetermined questionnaires/checklists are made available in electronic form for the purpose of exchanging, consulting, retrieving and completing the questionnaires/checklists in question over a communication network.

As a result of the computer-assisted generation of the documents and checklists in question, said documents and checklists are available on a worldwide scale, and since the relevant information can be processed electronically, the data can be made available in a quick and efficient manner without this having any appreciable cost-increasing effect on the supply chain as a whole.

Using the invention, (electronic) certificates of approval regarding compliance by participants in the supply chain with criteria with regard to the quality of the biomass as laid down within the framework of the supply chain can be issued, and compliance with the requirements and criteria is laid down in a contract.

The invention furthermore provides for the issuing of certificates having a limited period of validity, for example four years, and annual verification, for example. The requirements and verification criteria may be adapted inter alia on the basis of new or revised views, results of verifications carried out and government regulations, with the computer system generating correspondingly adapted checklists and documents. With a view to enforcing compliance with the requirements and verification criteria, the invention provides for the laying down of said requirements and criteria in a contract between parties involved in the supply chain and/or a national or international public body.

The invention also provides a system for electronically monitoring and managing the supply chain of biomass intended for use as a fuel in the production of energy, in particular electric energy, characterized by:
at least one computer coupled with a communication network, which comprises means for receiving and processing data regarding aspects of the supply chain that affect the quality of the biomass, including physical and chemical properties of the biomass, and recording said data in the database,
at least one electronic database coupled with the communication network, and
means for verifying compliance with criteria regarding the quality of the biomass as laid down within the supply chain on the basis of data recorded in the database.

In this way an intended worldwide electronic accessibility and efficient feasibility of the method according to the invention is provided.

In yet another embodiment of the system according to the invention, the means for receiving, processing and recording the data in question comprise predetermined questionnaires/checklists based on verification criteria regarding compliance with requirements with regard to the origin and the production of the biomass and the processing steps to which the biomass is or has been subjected during a relevant phase of the supply chain, receiving means arranged for receiving declarations regarding the biomass to be supplied within the framework of the supply chain, which declarations have been drawn up by participants in the execution of the supply chain at predetermined moments in the course of the supply chain on the basis of the questionnaires/checklists, processing means for processing the received declarations, and registration means for recording the processed declarations in the database for the purpose of forming a historic data file for the biomass in question.

In order to optimally facilitate worldwide use of the invention, means are furthermore provided for making the predetermined questionnaires/checklists available in electronic form, and access means are arranged for exchanging data over the communication network for the purpose of consulting, retrieving and completing the questionnaires/checklists in question.

Preferably, the system according to the invention provides for the consultation, retrieval and completion by third parties, using access codes, one or more of the checklists and documents generated by the computer system, as well as for the consultation of the historic data file or parts thereof. This is done in order to guarantee the integrity of the system as much as possible, and in order to guarantee that certificates provided by means comprised in the system with regard to the supplied biomass but also with regard to compliance by participants in the supply chain with the requirements and criteria are reliable and genuine.

Advantageous use may be made of existing communication facilities such as the Internet (World Wide Web), e-mail or other networks and communication facilities which may or may not be generally accessible. If desired, the invention provides for the exchange of data with third parties via a secured communication link.

In yet another embodiment of the system according to the invention, the system comprises means for measuring physical and chemical properties of the biomass for the purpose of electronically recording the same in the database.

The invention also comprises a computer programme comprising instructions to be executed by a computer, when the computer programme is loaded in the computer's working memory, which computer programme functions to support and carry out the steps as discussed above, as well as a data carrier, such as a floppy disk, a CD-ROM, a DVD, a memory stick, a hard disc etc, or a file made available via the Internet, for example, comprising a computer programme suitable for loading the programme into a working memory of a computer.

The invention will be explained in more detail hereinafter with reference to the appended drawings, in which:
Fig. 1 is a schematic view of the current use of sustainable energy sources in the electric energy production.
Fig. 2 is a schematic view of the parties and elements involved in the supply chain of biomass.
Fig. 3 is an elaborated schematic view of the supply chain according to Fig. 2.
Fig. 4 is a schematic example of a checklist of source-related requirements and verification criteria according to the invention.
Fig. 5 is a schematic example of a checklist for the production of Groene Stroom® from biomass according to the invention.
Fig. 6 is a schematic view of the computer system according to the invention.

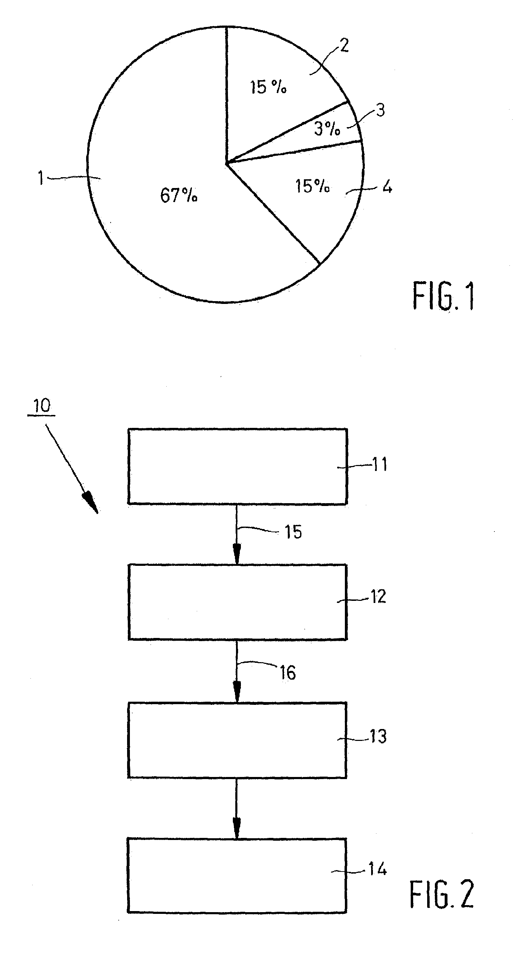

Fig. 1 is a circle graph which indicates the current share of biomass in the production of electric energy from sustainable energy sources. Sustainable energy sources as indicated in Fig. 1 are: biomass 1, wind 2, water 3 and waste disposal gas 4. The term waste disposal gas is understood to mean gas obtained from disposed waste. The circle graph indicates percentages of the respective share of the sustainable energy source in question in the total. An amount of 67% (about two thirds) of the total amount of electric energy from sustainable sources is obtained from biomass 1. Wind and waste disposal gas each represent 15%, while water contributes 3%.

As is schematically illustrated in Fig. 2, the supply chain 10 of biomass essentially comprises the following parties or elements: the source 11, the processor 12, the energy producer 13 and the customer 14.

As regards the source 11 of biomass, a distinction can be made essentially between biomass obtained from farming and biomass obtained from forestry.

The processor 12 comprises one or more processing plants for processing the biomass, for example for preparing it for transport. In the case of biomass in the form of sawdust or woodchips or the like, the processing of the biomass into a form suitable for transport may comprise the processing of the biomass from the source 11 into larger units, such as granules, lumps or pellets.

The energy producer 13 possesses the power plants in which electric energy is produced from the biomass. In practice a distinction may be made in the case of biomass between the production of electric energy from the biomass itself, i.e. "stand-alone" energy production, and the use of biomass as an additional fuel to be used together with other, conventional fuels such as coal, natural gas, etc.

The customer 14 is the end user of the electric energy produced from the biomass or sustainable energy sources, and the customer must be guaranteed that the Groene Stroom® he or she purchases has indeed been produced from sustainable energy sources.

In practice a logistic system of transport and storage, schematically indicated by the arrows 15 and 16, is provided between the source 11 and the energy producer 13.

In practice parts of the supply chain 10 have already been certified. Thus, wood, sawdust or woodchips may come from FSC-certified forests. The energy producer 13 possesses ISO-certified power plants and the connection to the power plants will take place via the biomass handbook. Said handbook is included in the ISO-specification. Said handbook specifies in great detail the manner in which the power plants deal with new biomass, sampling, storage, health and safety aspects. A conversion into supplied electricity (kWh) will have to take place via the conversion process. This takes place in so-called "account prove" computing programmes.

For other parts of the supply chain, however, there are no minimum or necessary requirements and verification criteria whatsoever. The method according to the invention provides said requirements and verification criteria, thus making it possible to arrange for certification for each individual part of the process, which will eventually lead to a closed and verifiable chain of custody. This makes it possible to offer the customer 14 a guaranteed and verifiable product in the form of Groene Stroom®. Government bodies or other management bodies can verify this process, since the invention provides for the starting and keeping of an electronic file or historic data file with regard to the supply chain 10 of the biomass.

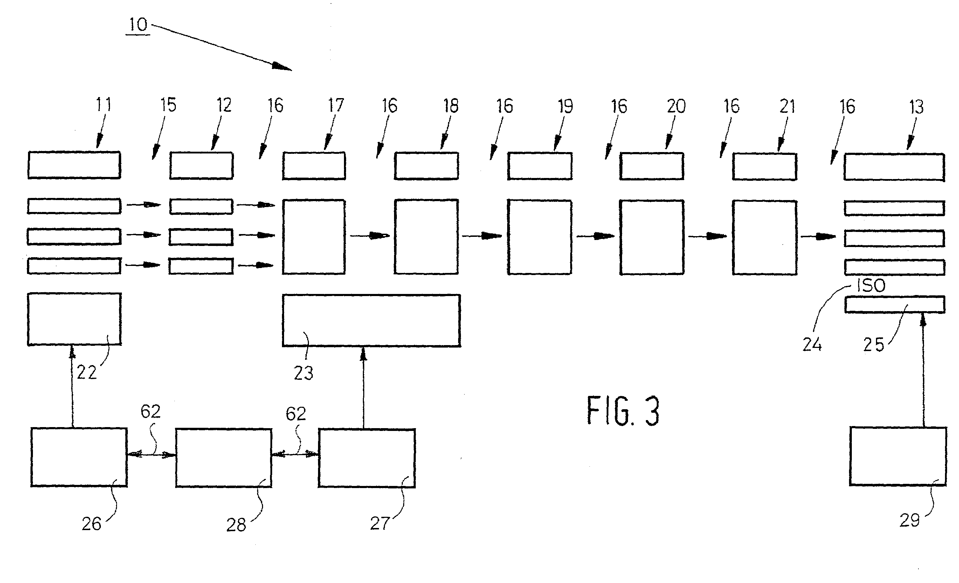

Fig. 3 illustrates in more detail the supply chain 10 of sustainable biomass. A large number of transport steps 15 and 16 can be distinguished from the source or producer 11 to the energy producer 13, with storage means 17, 18 and 19 being used, such as intermediate storage means 17 for storage of the biomass after it has been processed by a processor 12 in a processing plant 12, in anticipation of transport via a means of transport such as a truck. Subsequently, storage in a port of loading 18 may be necessary in the case of transport by seagoing vessel 19 or train or the like. The sea voyage is indicated at 16, followed by the possible transshipment to another seagoing vessel 20 and finally the unloading of the biomass in a port of discharge 21. From the port of discharge 21, transport 16 to the energy producer 13 takes place.

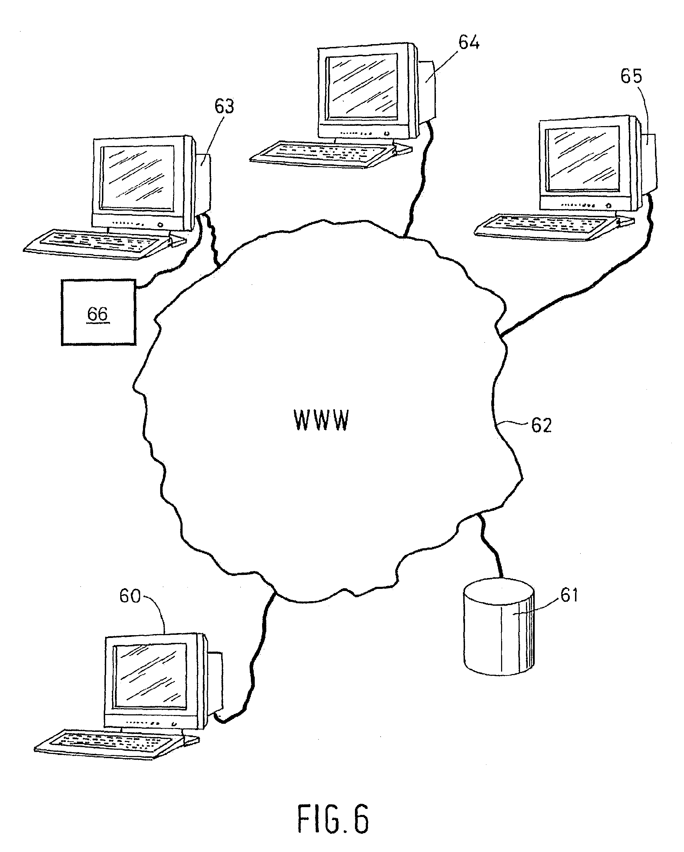

According to the invention, requirements and verification criteria may be laid down for each of the above-mentioned parts 11-21 of the supply chain 10 so as to arrive at a fully closed chain of custody. The instruments that are used for this purpose are checklists 22 and 23, which, in one embodiment of the system according to the invention, can be made available in electronic form by means 26 and 27, respectively, which questionnaires or checklists are concentrated on the source 11 and, for example, the transport and the storage 15, 16, 17 - 21. In one embodiment of the system according to the invention, access means 28 are provided to enable electronic access to the checklists 22, 23, which access means are electronically coupled with the means 26 and 27 in question, preferably via a communication network as schematically indicated at 62, for the purpose of making the checklist available. Also refer to Fig. 6.

In a preferred embodiment of the invention, the access means 28 are arranged for exchanging data over the communication network 62, using access codes, for the purpose of consulting and retrieving the questionnaires/checklists that have been made available in electronic form. All this results in one or more certificates or sub-certificates 25, also known as Green Gold® certificates.

The system according to the invention provides means 29 suitably arranged for electronically providing certificates, amongst other things, which means 29 may also be arranged for printing hard copies of the certificates in question.

The means 26, 27, 28 and 29 as described may be independently computer-controlled or form part of one or more computers, or comprise computer means suitably programmed for carrying out the functions intended to be performed by said means and/or printing means for providing hard copies of the questionnaires/checklists 22, 23 and/or certificates 25.

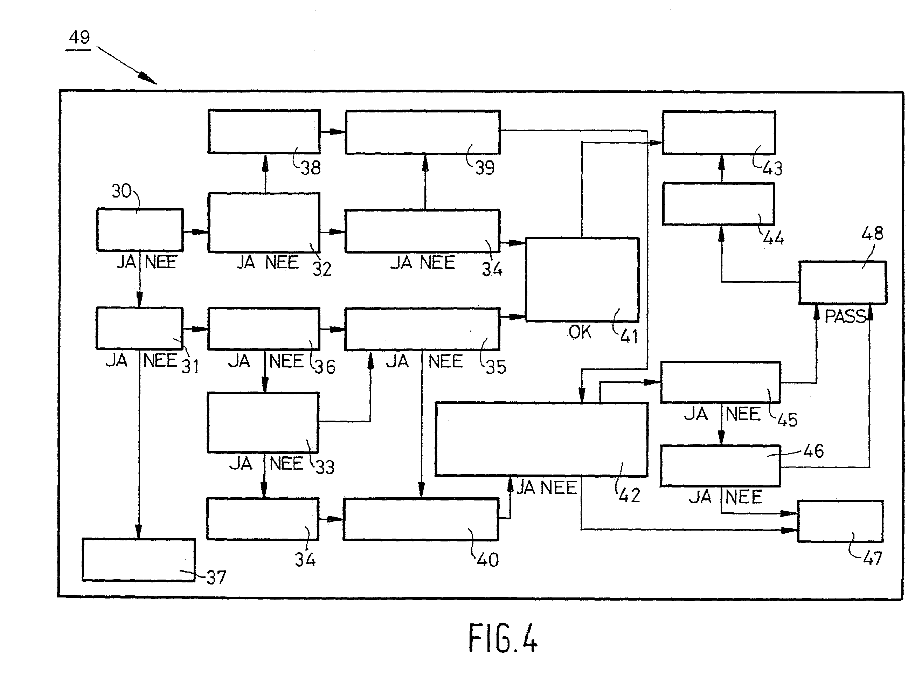

Fig. 4 shows an example of the checklist 49 for the source of biomass, such as farming 31 or forestry 30. Verification may take place on the basis of existing criteria 32, 33, 34 or typical, new specific criteria and requirements 34, 35, which may vary with each individual country (36). It is also possible that criteria are absent altogether (37), of course. In the case of FSC-certification, a "pre-scope certificate" 38 may be issued. When the requirements and verification criteria have been met, permission may be given (39, 40) for the production of Groene Stroom® and, if necessary, for shipment 42 as well as for the issue of a certificate 43.

Verification of compliance with the requirements takes place via random checks 44, 45, whereupon the biomass is approved ("pass" - 46) or rejected ("not OK" - 47).

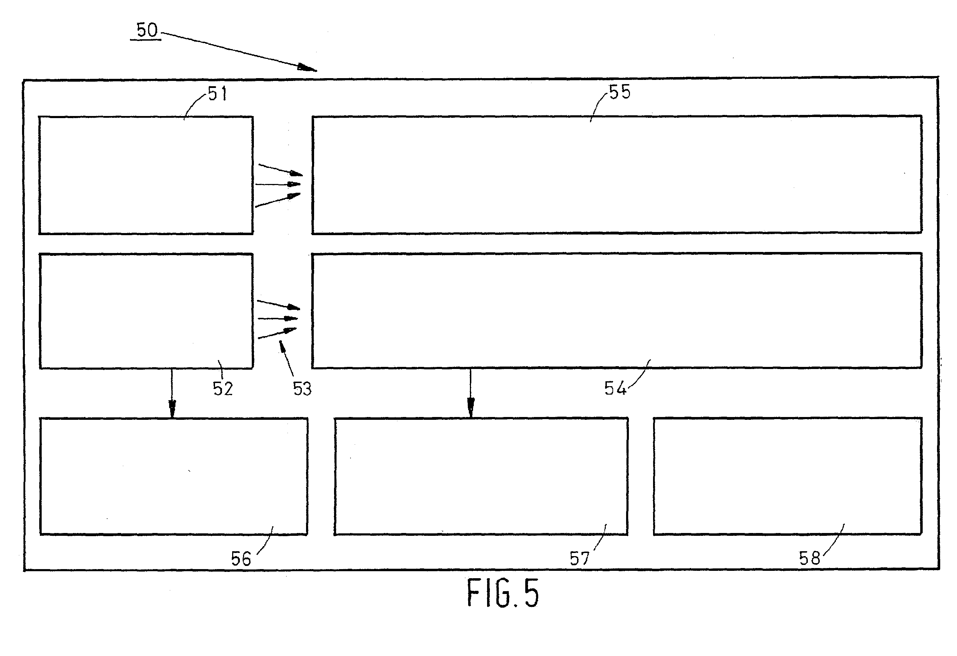

Fig. 5 shows an example of a checklist 50 specifically geared to the production of electric energy from biomass 51 obtained from farming ("agri products") and biomass 52 obtained from forestry ("rest wood") through the formation of "pellets" 53, for example, and transport 54 and 55, respectively. This results in checklist results 56 and 57 and a declaration of approval 58.

It is noted that the various steps in the certification process may be carried out by different authorities.

The table 1 below provides a survey of possible minimum or necessary requirements for sustainable energy sources, related to existing criteria. Said requirements may also form part of specific criteria or criteria to be newly defined, of course.

It will be appreciated that the invention is not limited to these criteria.

Fig. 6 is a very schematic view of a computer system according to the invention, comprising a computer 60, which is connected to an electronic database 61, and a communication network 62, such as the Internet, to which computers 63, 64, 65 of third parties are connected, such as parties involved in the supply chain 10 and verifying or certifying agencies. The computers 60, 63, 64, 65 comprise software suitable for carrying out the method as described in the foregoing.

The computer 60 comprises access means (not shown) arranged for exchanging data over the communication network 62 for the purpose of consulting, retrieving and completing relevant questionnaires/checklists. To this end, the means 26, 27 and 28 may be incorporated in the computer 60 or form part thereof. Also the means 29 for providing certificates in electronic form may be advantageously incorporated in the computer 60.

The participants in the supply chain 10 can pass on declarations on the biomass to be supplied within the supply chain to the computer 60 via the computers 63, 64, 65, to which end the computer 60 is provided with suitable receiving means (not shown). The computer 60 is provided with suitable processing means (not shown) for processing the received declarations, and furthermore with registration means (not shown) for recording the processed declarations in the database 61 for the purpose of forming a historic data file for the biomass in question. Receiving means, processing means and registration means suitable for the purpose of the invention are known per se to those skilled in the art and require no further explanation. It is noted that the receiving means, the processing means and the registration means may be provided in the form of separate components or be combined into a single component.

It will be understood that the computers 63, 64, 65 as such are provided with suitable communication means for communication with the computer 60 via the communication network 62. Suitable printing means or other display means may be connected to the computer 63, 64, 65 for displaying and completing checklists and, if desired, printing or displaying certificates (not explicitly shown), as may input means such as a keyboard, a touch screen, data input terminals, and the like. Printing or display means and input means suitable for this purpose are known to those skilled in the art and require no further explanation.

The computers 63, 64, 65 may furthermore be arranged for coupling therewith of suitable means for measuring physical and chemical properties of biomass for the purpose of electronically recording the same in the data file. Such means are schematically indicated at 66 in Fig. 6, and they are only coupled with to the computer 63 in said figure. The means 66 as such may also be arranged for or be coupled with means for sampling and the like. Means suitable for this purpose are also known per se in practice to those skilled in the art, and consequently they do not require any further explanation.

In order to maintain the integrity of the system as a whole as much as possible, it is preferable to carry out the exchange of data via secured communication links.

Although it is not explained in detail 1 herein, it will be appreciated that verification means suitable for verifying compliance with criteria regarding the quality of the biomass as laid down within the framework of the supply chain may be incorporated as such in the computer 60 or be separately connected to the communication network 62 or form part of the electronic database 61.

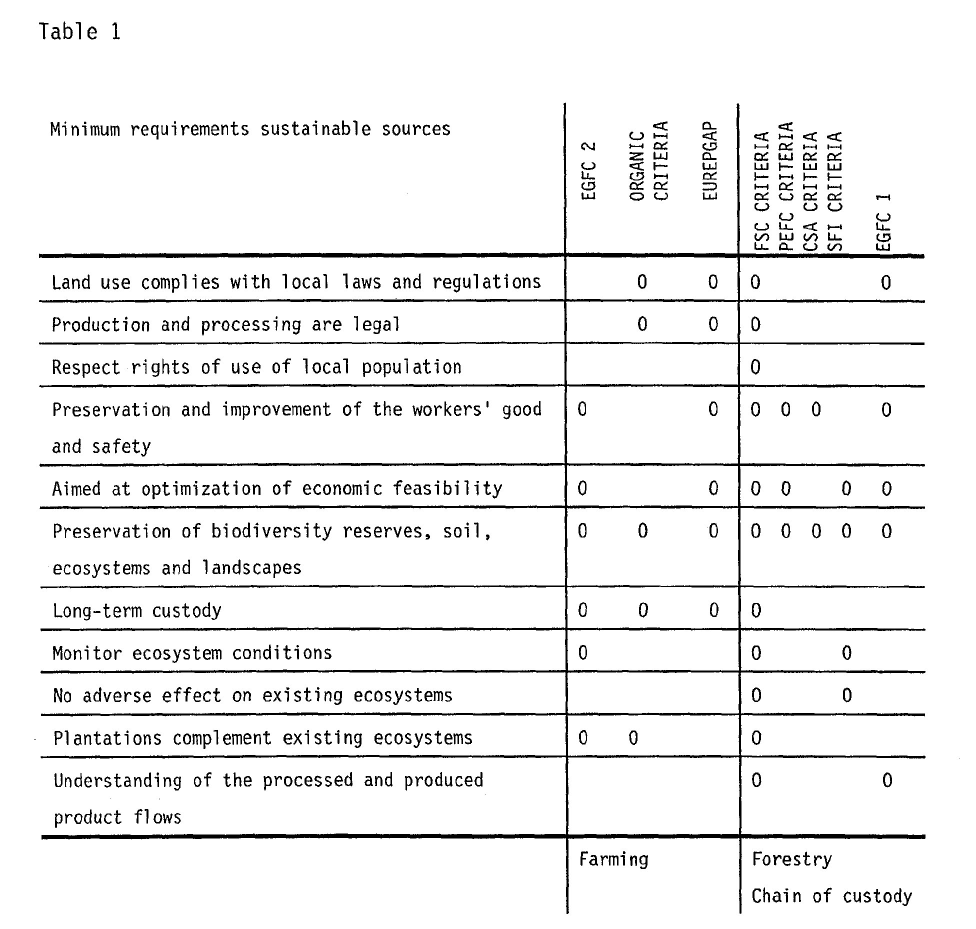

The invention is not limited to the above examples of requirements and verification criteria, and many additions and alterations, for example to verification criteria for the physical and chemical composition of the biomass, will be apparent from the foregoing to those skilled in the art without departing from the scope of the invention as defined in the appended claims.

### List of reference numerals

10 Supply chain biomass
11 Source
Producer(s)
Farming/Forestry
Farming/Forestry
Farming/Forestry
Tracking & tracing
12 Processor
Plant
Processing
Processing
Processing
13 Energy producer
Power plant
Farming/forestry products
Farming/forestry products
Farming/forestry products
14 Customer
15 Transport
16 Transport; Transport; Loading; Sea voyage; Discharge
17 Storage
Farming/forestry product
Tracing
18 Port of loading (storage)
Farming/forestry product
19 Sea-going vessel
Farming/forestry product
20 Sea-going vessel
Farming/forestry product
21 Port of discharge
Farming/forestry product
22 Checklist sustainable source
Sustainable source
Sustainable source
Sustainable source
All sources in accordance with sustainable current scheme?
yes
23 Checklist sustainable transport
Sustainable transport
Has the contracted cargo been shipped and received in clean and sound condition? yes
Do the samples (fingerprints) have a corresponding chemical composition? yes
24 ISO
25 'Green Gold'-certificate awarded?
Number certificate; yes
26 Checklist means
27 Checklist means
28 Access means
29 Certificate means
30 Source: forestry
31 Source: farming
32 FSC, PEFC, CSV-SFM, SFI, FSC pre-scope
33 Organic Eurepgap EGFC2
34 Specific criteria
34 EGFC2
35 Specific criteria
36 EU-country
37 No criteria available
38 FSC pre-scope certificate
39 Start permission
40 Start permission
41 Groene stroom® source
42 Total shipment <3000 MT, and written claim
green flow >70/30
43 Certificate number
44 Random check number
45 Random check EGFC3 criteria
46 Random check positive
47 Not OK
48 Pass
49 Checklist source biomass
50 Checklist
51 Certificate

| Producer(s) Transport | | Factory |
|---|---|---|
| Agri product | --------> | processing |
| Agri product | --------> | processing |
| Agri product | --------> | processing |

52 Certificate

| Producer(s) Transport | | Factory |
|---|---|---|
| Rest wood | --------> | Wood pellets |
| Rest wood | --------> | Wood pellets |
| Rest wood | --------> | Wood pellets |

53 Transport; Transport
54 Tracing
Storage

| | | |
|---|---|---|
| Cargo wood pellets | --------> | Transport |

Port of loading

| | | |
|---|---|---|
| Cargo wood pellets | --------> | Loading |

Sea-going vessel

| | | |
|---|---|---|
| Cargo wood pellets | --------> | Sea voyage |

Sea-going vessel

| | | |
|---|---|---|
| Cargo wood pellets | --------> | Discharge |

| Port of discharge (storage) | | Power plant |
|---|---|---|
| Cargo | --------> | Wood pellets |
| wood | --------> | Wood pellets |
| pellets | --------> ISO | Wood pellets |

55 Tracing
Storage

| | | |
|---|---|---|
| Rest product | --------> | Transport |

Port of loading (Storage)

| | | |
|---|---|---|
| Rest product | --------> | Loading |

Sea-going vessel

| | | |
|---|---|---|
| Rest product | --------> | Sea voyage |

Sea-going vessel

| | | |
|---|---|---|
| Rest product | --------> | Discharge |

| Port of discharge (storage) | | Power plant |
|---|---|---|
| Rest | --------> | Rest product |
| product | --------> | Rest product |
| | --------> ISO | Rest product |

56 Green source checklist:
GS ..........................
GS ..........................
GS ..........................
GS ..........................
GS ..........................
All sources are green flow sources? yes
57 Green transport:
GT ..........................
Predestinate cargo shipped and received in clean and sound condition? yes
The fingerprint samples have equal chemical results? yes
58 Declaration
Declaration number:
..........................
Approved non-certified green flow? (70/30 rule)
Approved under number:
..........................
60,63,64,65 Computers
61 Database
62 Communication network
66 Measuring device(s)

## Claims

**1.** A system for electronically monitoring and managing the supply chain of biomass intended for use as a fuel in the production of energy, in particular electric energy, **characterized by**:
at least one computer coupled with a communication network, which comprises means for receiving and processing data regarding aspects of the supply chain that affect the quality of the biomass, including physical and chemical properties of the biomass, and recording said data in the database,
at least one electronic database coupled with the communication network, and
means for verifying compliance with criteria regarding the quality of the biomass as laid down within the supply chain on the basis of data recorded in the database.

**2.** A system according to claim 1, **characterized in that** the means for receiving, processing and recording the data in question comprise predetermined questionnaires/checklists based on verification criteria regarding compliance with requirements with regard to the origin and the production of the biomass and the processing steps to which the biomass is or has been subjected during a relevant stage of the supply chain, receiving means arranged for receiving declarations regarding the biomass to be supplied within the framework of the supply chain, which declarations have been drawn up by participants in the execution of the supply chain at predetermined moments in the course of the supply chain on the basis of the questionnaires/checklists, processing means for processing the received declarations, and registration means for recording the processed declarations in the database for the purpose of forming a historic data file for the biomass in question.

**3.** A system according to claim 2, **characterized in that** means are provided for making the predetermined questionnaires/checklists available in electronic form, and **in that** access means are arranged for exchanging data over the communication network for the purpose of consulting, retrieving and completing the questionnaires/checklists in question.

**4.** A system according to any one or more of the preceding claims, **characterized in that** further access means are arranged for exchanging data over the communication network to enable participants in the execution of the supply chain to consult the data file or parts thereof.

**5.** A system according to claim 3 or 4, **characterized in that** said access means are arranged for exchanging data over the communication network, using access codes, for the purpose of consulting and retrieving the questionnaires/checklists made available in electronic form and for the purpose of consulting the historic data file.

**6.** A system according to claim 3, 4 or 5, **characterized in that** said access means are arranged for exchanging data via a secured communication link.

**7.** A system according to any one or more of the preceding claims, **characterized in that** means are provided for issuing a certificate of approval regarding compliance, by participants in the supply chain, with criteria with regard to the quality of the biomass as laid down within the framework of the supply chain.

**8.** A system according to any one or more of the preceding claims, **characterized in that** means are provided for issuing a certificate of approval for the biomass supplied for use as a fuel on the basis of the data as recorded in the historic data file regarding compliance with the criteria and requirements as laid down within the framework of the supply chain.

**9.** A system according to any one or more of the preceding claims, **characterized in that** means are provided for measuring physical and chemical properties of the biomass for the purpose of electronically recording the same in the data file.

**10.** A method for electronically monitoring and managing the supply chain of biomass for use as a fuel for the production of energy, in particular electric energy, with the support of a suitably programmed computer system, **characterized by** the steps of:
receiving and processing data with regard to aspects of the supply chain that affect the quality of the biomass, including physical and chemical properties of the biomass, and recording said data in an electronic database, and
verifying compliance with criteria as laid down within the framework of the supply chain with regard to the quality of the biomass on the basis of data stored in the database.

**11.** A method according to claim 10, **characterized by** the further step of making available predetermined questionnaires/checklists based on verification criteria regarding compliance with requirements with regard to the origin, the production and the processing steps to which the biomass is or has been subjected during a relevant stage of the supply chain, wherein the step of receiving and processing data and recording said data in a database comprises the receiving of declarations relating to the biomass to be supplied within the supply chain, which are to be provided by participants in the execution of the supply chain, which declarations are being or have been drawn up at predetermined moments within the supply chain on the basis of questionnaires/checklists, the processing of the declarations that have been received and the storing of the processed declarations in a database, as well as the step of forming a historical data file for the biomass in question on the basis of the processed declarations.

**12.** A method according to claim 11, **characterized in that** said predetermined questionnaires/checklists are made available in electronic form for the purpose of exchanging, consulting, retrieving and completing the questionnaires/checklists in question over a communication network.

**13.** A method according to any one or more of the claims 10-12, **characterized by** the issuing of a certificate of approval regarding compliance, by participants in the supply chain with criteria with regard to the quality of the biomass as laid down within the framework of the supply, chain.

**14.** A method according to claims 11 and 13, **characterized by** the issuing of a certificate of approval for the biomass supplied for use as a fuel on the basis of the data laid down in the historic data file regarding compliance with the criteria and requirements that apply within the framework of the supply chain.

**15.** A method according to claim 14, **characterized in that** certificates having a limited period of validity are issued.

**16.** A method according to any one or more of the claims 10-15, **characterized in that** the supply chain comprises the route from the producer of the biomass to the energy producer, possibly with one or more intermediate parties, with separate requirements and criteria being formulated for one or more of:
- means of production involved in the production of the biomass,
- processing means involved in the processing of the biomass,
- storage means involved in the storage of the biomass,
- means of transport involved in the transportation of the biomass, and
- energy producing means involved in the production of energy from the biomass.

**17.** A method according to claim 16, **characterized in that** in addition to existing and nationally and/or internationally recognized requirements and criteria, specific or additional requirements and verification criteria are formulated for different kinds of biomass, in particular for biomass obtained from forestry and from farming.

**18.** A method according to claim 16 or 17, **characterized in that** said requirements and criteria in particular relate to one or more of the following aspects:
- compliance with government regulations, both national and international,
- observance of local rights of use,
- compliance with and improvement of the good, health and safety standards for persons involved in the supply chain,
- optimisation of economic feasibility,
- custody and monitoring of biodiversity reserves, soil, ecosystems and landscapes,
- long-term sustainability of biomass sources, and
- the quality of the biomass in relation to the production of energy.

**19.** A method according to any one or more of the preceding claims, **characterized in that** said criteria comprise the sampling and analysis of the biomass for the purpose of determining chemical and physical properties thereof

**19.** A method according to claim 18, **characterized in that** said sampling comprises the measuring of physical and chemical properties of the biomass for the purpose of recording the same in the data file.

**20.** A method according to any one or more of the claims 11-19, **characterized in that** said requirements and criteria are adapted on the basis of new or revised views, results of verifications carried out and government regulations, with correspondingly adapted checklists and documents being generated.

**21.** A method according to any one or more of the claims 10-20, **characterized in that** compliance with the requirements and criteria is laid down in a contract.

**22.** A computer programme comprising instructions to be executed by a computer when the computer programme is loaded in the computer's working memory, which computer programme functions to support and carry out the steps according to any one or more of the claims 10-21.

**23.** A data carrier comprising a computer programme according to claim 22 which is suitable for loading the programme into a working memory of a computer.
